Europäisches Patentamt

European Patent Office

Office européen des brevets

(19)

(11) Publication number: **0 074 455**
A1

(12) # EUROPEAN PATENT APPLICATION

(21) Application number: **81830158.2**

(22) Date of filing: **14.09.81**

(51) Int. Cl.³: **A 23 L 1/176**
**//A23L1/325**

(43) Date of publication of application:
**23.03.83 Bulletin 83/12**

(84) Designated Contracting States:
**AT BE CH DE FR GB IT LI LU NL SE**

(71) Applicant: **EXPORT TRADING s.r.l.**

**I-43029 Traversetolo Guardasone (Parma)(IT)**

(72) Inventor: **Santi, Ettore**
**Viale Gozzadini 5**
**I-40100 Bologna(IT)**

(54) **Alimentary product for breading fish and preparing them for cooking.**

(57) The fish initially moistened is directly breaded with a granular compound which, absorbing water, sets on it forming a moist layer.

Soft wheat meal, salt, glutammate, vinegar powder, dishydrated vegetables and herbs as well as natural flavours are used.

The manufacturing processing foresees the mixing of the components that are passing through a kneading machine and then a drying chamber. The compound is for prompt use and a long preservation, and avoids the present breading operations.

EP 0 074 455 A1

- 1 -

"Alimentary product for breading fish and preparing for coo-
king.

The invention foresees a granular compound that can be prepared for a long preservation to be promptly used to directly
bread ichtic products in general previously moistened with wa
ter. The breading of these products, by conglobing them in a
layer envelope, permits to preserve their natural features and
to add their flavour to the one of the enveloping paste.

At present, the dipping mixture must be separately prepared
in advance which gives a particular relish to the paste and o
perates as a conglobing means, and the breading products enab
ling the moist layer envelope. The mixture employs: salt, water, vinegar, vegetables and herbs and natural flavours. These components are successively poured into a container and he
rein mixed and amalgamated. The breading product consists of
either meal or grated bread. The fish is then completely dipped into the mixture and passed in the breading product. Subsequently it is fried either in oil, or butter or derivates.

The invention allows: to avoid the preparation of the paste
and to carry out the relevant operation phases, and it perfor
ms breading by using the conventional products, which condition guarantees the genuineness of the procedure. A granular pro
duct to be packed is used foreseeing either the components of the dipping mixture or those for breading, permitting the prompt employ and the long preservation in store.

The base composition foresees: soft wheat meal, salt, glutammate, vinegar powder,dishydrated vegetables, herbs and natural flavours. The manufacturing foresees the introduction of the base components through servers on the manufacture line which lets them into a mixer. The mixture can be carried out in different ways according to well known procedures with hot water or in room temperature or by introducing water steam. The amalgamated mixture reaches a kneading machine forming the compound still moist in grains which passes into a drying chamber. The stabilization and drying of the compound are thus resulting with a humidity content from 10% to 12%.

The product can be preserved in store for a long time and allows the employ for: home use, concern tables, overfrozen product manufactures and retail shops for meat and derivates.

After having opened the packing, for the prompt employ the user pours the required product into a container, moistens the fish with water and passes it in the compound. The water brought by the fish acts as a conglobating means of the compound and brings it from the granular state to the moist and doughy one similar to the present paste one. The readiness of employ is allowed by the high feature of hygroscopicity of the compound which, by absorbing water, transforms its physical state by adhering to a doughy mass on the humid wall of the ichtic product.

The components may vary and be properly integrated with o-

**0074455**

thers to permit different flavours. In a similar way, the production proceedings may be different with a view to getting the anhydrous product. Packing may be carried out in any known means and forms.

CLAIMS:

1)Alimentary product for breading fish and preparing for cooking, characterized by the fact that it permits to replace the preparation of the breading paste and the relevant present employ phases with a granular compound with high hygroscopic action, to be packed for a long preservation and allowing a prompt employ. As base components are used: soft wheat meal, salt, glutammate, vinegar powder, dishydrated vegetables and herbs and natural flavours. Manufacture can be carried out by putting the above components, through servers, on the feeding line to a mixer for amalgamating the product. It then passes to a kneading machine forming the grains which are stabilized in a drying device. After having opened the packing, the users pours the compound he requires into a container, moistens the ichtic products with water and passes them in the compound. The contact with the fish humid wall transforms the compound from the anhydrous state into the moist doughy one and lets it adhere as a layer on the fish.

# EUROPEAN SEARCH REPORT

**0074455**

Application number

EP 81 83 0158

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-3 586 512 (J.MANCUSO et al.)<br>*Examples IV,VII; column 7, lines 10-19* | 1 | A 23 L 1/176 //<br>A 23 L 1/325 |
| | --- | | |
| A | DE-A-2 610 541 (GENERAL FOODS)<br>*Example 1; page 4, paragraph 3*<br>& CAA 1063421 | 1 | |
| | ----- | | |

TECHNICAL FIELDS
SEARCHED (Int Cl. ³)

A 23 L 1/00
A 23 B 4/00
A 23 P 1/00

The present search report has been drawn up for all claims

| Place of search | Date of completion of the search | Examiner |
|---|---|---|
| THE HAGUE | 28-04-1982 | DESMEDT G.R.A. |